# EUROPEAN PATENT APPLICATION

(11) **EP 4 850 983 A1**
(43) Date of publication of application: **09.12.2026**
(21) Application number: 26181455.2
(22) Date of filing: 27.05.2026
(51) Int. Cl.: B60R 9/02, B60R 11/06, B60R 5/04

(54) **MOUNTING DEVICE FOR ATTACHING STORAGE COMPARTMENT TO TRANSPORT VEHICLES**

(30) Priority: 05.06.2025 US 202519229625
(71) Applicant: Carrier Corporation, Palm Beach Gardens, FL 33418 (US)
(72) Inventor: DOUBLET, Pauline, 76520 Franqueville St Pierre (FR); DEHONDT, Emmanuel, 76520 Franqueville St Pierre (FR)
(74) Representative: Dehns

(57) **Abstract**

Described herein is an attachment assembly for attaching a storage compartment (130) to a transport vehicle, the attachment assembly comprising one or more girder beams (150) configured to couple to a frame (132) of the storage compartment (130), one or more attachment interfaces (142) slidably coupled to the one or more girder beams (150), and at least one fastener (144) configured to reversibly fasten the one or more attachment interfaces (142) to at least one beam (116) of the transport vehicle.

## Description

### BACKGROUND

The invention relates to the field of vehicle attachments, and more particularly, to a mounting device for attaching storage compartment to transport vehicles.

### SUMMARY

According to a first aspect of the invention there is provided an attachment assembly for attaching a storage compartment to a transport vehicle, the attachment assembly comprising one or more girder beams configured to couple to a frame of the storage compartment, one or more attachment interfaces slidably coupled to the one or more girder beams, and at least one fastener configured to reversibly fasten the one or more attachment interfaces to at least one beam of the transport vehicle.

Optionally, the at least one fastener is configured to friction hold the one or more attachment interfaces and the at least one beam together.

Optionally, the one or more attachment interfaces comprise a planar structure.

Optionally, the at least one fastener is configured to couple the planar structure to a flange of the at least one beam.

Optionally, the planar structure comprises at least one arm configured to slidably support the one or more girder beams.

Optionally, the attachment assembly further comprises a bracket having a passage for the one or more girder beams.

Optionally, the one or more attachment interfaces are slidably coupled to the one or more girder beams via the bracket.

Optionally, the passage is formed by physical coupling of the bracket with an arm of the one or more attachment interfaces.

Optionally, the one or more girder beams comprise a protruding portion extending from the one or more attachment interfaces, the protruding portion being configured to couple to the frame.

Optionally, the attachment assembly further comprises another attachment interface configured to slidably couple the one or more girder beams to the frame.

Optionally, the one or more girder beams are perpendicular to the at least one beam.

Optionally, the one or more attachment interfaces comprise at least one slot extending along at least one dimension of the one or more attachment interfaces.

Optionally, the at least one fastener is slidably coupled to the one or more attachment interfaces at any position along the at least one slot.

Optionally, the one or more attachment interfaces are configured to couple to at least one position on the one or more girder beams and/or the at least one beam.

Optionally, the one or more girder beams are fixedly coupled to the frame.

Optionally, the at least one fastener comprises a clamp.

Optionally, the one or more attachment interfaces comprise a first attachment interface fixedly attached to the one or more girder beams, and a second attachment interface slidably coupled to the one or more girder beams.

Optionally, the attachment assembly further comprises another fastener configured to fixedly couple the one or more girder beams to the one or more attachment interfaces.

According to a second aspect of the invention there is provided a mounting device comprising at least one attachment interface configured to reversibly couple to at least one beam, and configured to slidably couple to a girder beam, the girder beam being configured to support a storage compartment.

According to a third aspect of the invention there is provided an attachment assembly for attaching a storage compartment to a transport vehicle, the attachment assembly comprising one or more girder beams configured to couple to a frame of the storage compartment, one or more attachment interfaces fixedly coupled to the one or more girder beams, wherein the one or more attachment interfaces comprise at least one attachment interface having a slot, and at least one fastener configured to reversibly fasten the one or more attachment interfaces to at least one beam of the transport vehicle at any position along the slot.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention and are incorporated in and constitute a part of this specification. The drawings illustrate exemplary embodiments of the invention and, together with the description, serve to explain the principles of the invention by way of example only.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A illustrates an example representation of a transport vehicle supporting a transport refrigeration unit (TRU) and a storage compartment attached thereto by an attachment assembly.
FIG. 1B illustrates a partial perspective view of the transport vehicle.
FIG. 2 illustrates an isolated perspective view showing the coupling of the storage compartment to beams of the transport vehicle via an attachment assembly.
FIG. 3A illustrates an isolated perspective view of the attachment assembly coupling girder beams to the beams of the transport vehicle.
FIG. 3B illustrates a close-up, orthogonal side view of the coupling of an attachment interface, bracket, and fastener to a flange of the beams of the transport vehicle and the girder beam.
FIG. 4 illustrates a perspective view showing an example coupling mechanism between the girder beam and a frame of the storage compartment.
FIG. 5 illustrates a perspective view of an alternative embodiment of an attachment interface having slots.
FIG. 6 illustrates a perspective view of another alternative embodiment of an attachment interface having arms extending around the girder beam and coupled to a bracket.
FIG. 7 illustrates a perspective view of another attachment interface embodiment coupling the girder beam to the frame.

### DETAILED DESCRIPTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the specification, the components described herein may be positioned in any desired orientation. Thus, the use of terms such as "above," "below," "upper," "lower," "first," "second," or other like terms to describe a spatial relationship between various components or to describe the spatial orientation of aspects of such components should be understood to describe a relative relationship between the components or a spatial orientation of aspects of such components, respectively, and the components described herein may be oriented in any desired direction.

Transport refrigeration units (TRUs) may refer to refrigeration systems designed to control the temperature of enclosed spaces, such as compartments or containers, typically for transporting temperature-sensitive goods. TRUs are commonly transported using transport vehicles, which may include any of trailers, semi-trailer, trucks, and/or tractors.

The transport vehicles may include one or more beams. The beams may be configured to support the container, which in turn may support the TRU. Furthermore, trailer beams may be configured to allow one or more storage compartments to be attached thereto. The storage compartments may include, for example, a battery box configured to house batteries for powering the TRU or other systems associated with the transport vehicle.

Such storage compartments may typically hang from the beams. Various fixed or reversible mounting devices may be employed to attach the storage compartment to the beams. Examples of such mounting devices may include, but are not limited to, nails, screws, nuts and bolts, or welds.

However, existing solutions for attaching storage compartments to beams often lack adaptability. For instance, some solutions may involve fixed attachments, such as welding the compartment or mounting structure directly to the beams. Such fixed solutions prevent easy removal or repositioning of the storage compartment and are not adaptable to transport vehicles with different beam configurations or widths. Other existing solutions that allow for removal may be complex in design or may not be adjustable to accommodate variations in the width between beams found on different transport vehicles. Consequently, a storage compartment system designed for one specific transport vehicle model may not be readily transferable or usable on another transport vehicle model with different dimensions, limiting modularity and increasing complexity for fleet owners operating diverse trailer types.

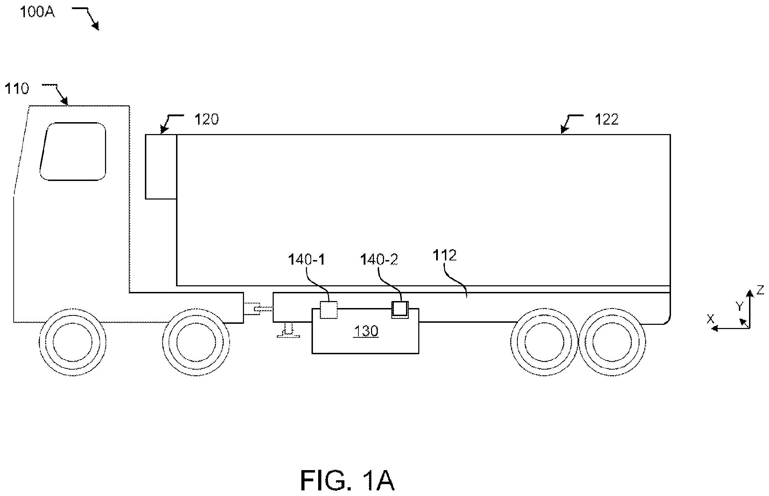

The invention provides an attachment assembly including at least one attachment interface. The attachment interface is configured to reversibly couple to at least one beam of a transport vehicle, and is also configured to slidably couple to a girder beam. The attachment interface may be coupled to the beam via a fastener, such as a clamp. Furthermore, the attachment interface may be coupled to a bracket, which forms a passage configured to allow the girder beam to slide relative to the attachment interface. The girder beam may be configured to support a storage compartment. For instance, the girder beam may be coupled to a frame associated with the storage compartment. Such slidable coupling of the girder beam allows the attachment assembly to adapt to transport vehicles having different distances between beams. For instance, the attachment interface may slide on the girder beam such that the attachment interface is aligned with the beam of the transport vehicle, thereby allowing the attachment interface to adapt to beams of different sizes. Once an attachment interface is moved to the desired position along the girder beam to align with the beam of the transport vehicle, the attachment interface may then be fixedly coupled to the girder beam at that specific position, for example, by tightening a component of the slidable coupling mechanism or through an additional fastener, to prevent further sliding of the attachment interface relative to the girder beam during operation. Various embodiments of the invention are described in reference to FIGs. 1A to 7.

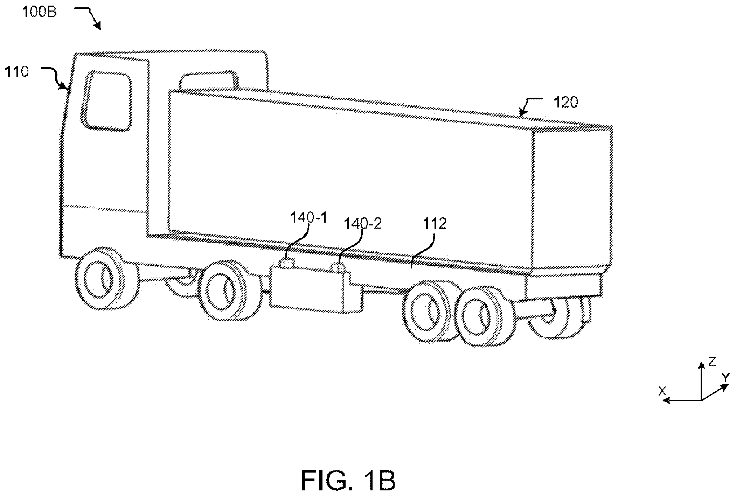

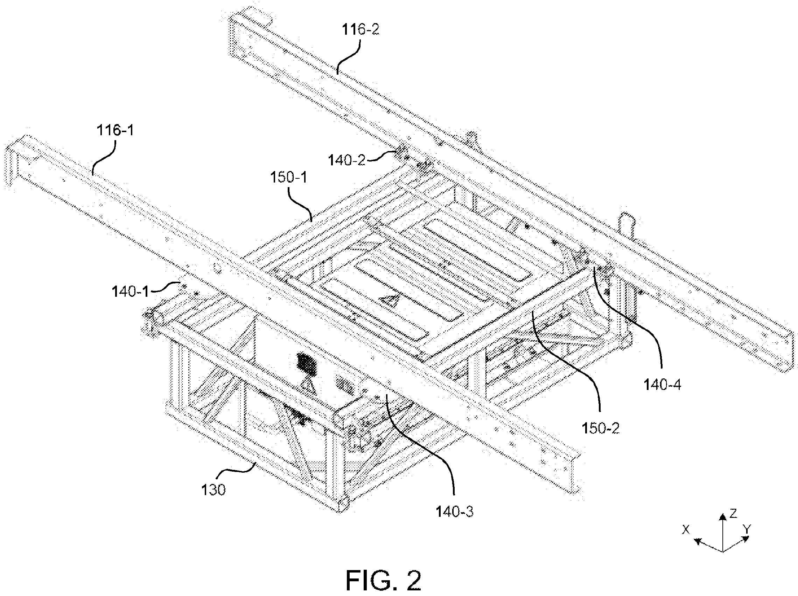

Referring to FIGs. 1A and 1B, an example representation 100A of a TRU 120 is illustrated supported on a transport vehicle. The transport vehicle may include a trailer 112, a truck (also referred to as a prime mover 110), a tractor (not shown), the TRU 120, or any combination thereof. In one or more embodiments, the TRU 120 may be supported on the trailer 112. The trailer 112 may be attached to or pulled by a tractor or the prime mover 110. In one or more embodiments, the trailer 112 may include at least one beam (such as trailer beams 116-1 and 116-2 as shown in FIGs. 2 to 7). The trailer 112 may also be configured to support a storage compartment 130. The storage compartment 130 may be coupled to the trailer beams 116 by at least one mounting device 140 (shown in FIG. 1B). In one or more embodiments, the storage compartment 130 may be coupled underneath the trailer 112. While embodiments of the invention are described in the context of attaching the storage compartment 130 on trailer beams 116-1, 116-2 of the trailer 112, it may be appreciated that the invention may be suitably adapted for attaching the storage component 130 on any beam of the transport vehicle.

In one or more embodiments, the TRU 120 may represent a refrigeration system designed for mobile applications. The TRU 120 may be configured to provide cooling and/or heating for a temperature-controlled enclosure 122 on the trailer 112, thereby ensuring that cargo is maintained at a desired temperature during transport.

In one or more embodiments, the trailer 112 may include a support surface, such as the bed and/or the trailer beams 116 that form and/or support the bed. Cargo and/or equipment like the TRU 120 may be placed over the support surface. The trailer 112 may further include wheels and axles that allow the trailer 112 to be pulled freely by the prime mover 110.

In one or more embodiments, the trailer beams 116 may form a part of the structural chassis or frame of the trailer 112. The trailer beams 116 may include I-beams, C-beams, L-beams, or other beam types having at least one flange. In one or more embodiments, the trailer 112 may also include transverse members or joists (not shown) connecting the trailer beams 116.

In one or more embodiments, multiple trailer beams 116 may be arranged substantially parallel to each other, extending along at least one dimension of the trailer 112. The direction along which the trailer beams 116 are parallel may be referred to as the longitudinal direction (corresponding to the X-axis as depicted in FIGs. 1A and 1B). A direction perpendicular to the longitudinal direction, spanning the distance between adjacent parallel trailer beams 116, may be referred to as the transverse direction (corresponding, for example, to the Y-axis as depicted in FIGs. 1A and 1B).

The trailer 112 may also include transverse members or joists connecting the trailer beams 116, oriented along the transverse direction. The trailer beams 116 may be made from rigid materials configured to bear the load of the trailer bed, the TRU 120, the storage compartment 130, and/or any cargo carried thereon.

In one or more embodiments, the storage compartment 130 may be a container or enclosure 122 attached to the trailer 112. In one or more embodiments, the storage compartment 130 may be configured to store various items, such as batteries (e.g., for powering the TRU 120 or other auxiliary systems), tools, spare parts, or other equipment. In one or more embodiments, the storage compartment 130 may be coupled underneath/below the trailer 112. In one or more embodiments, the storage compartment 130 may be coupled underneath the trailer beams 116.

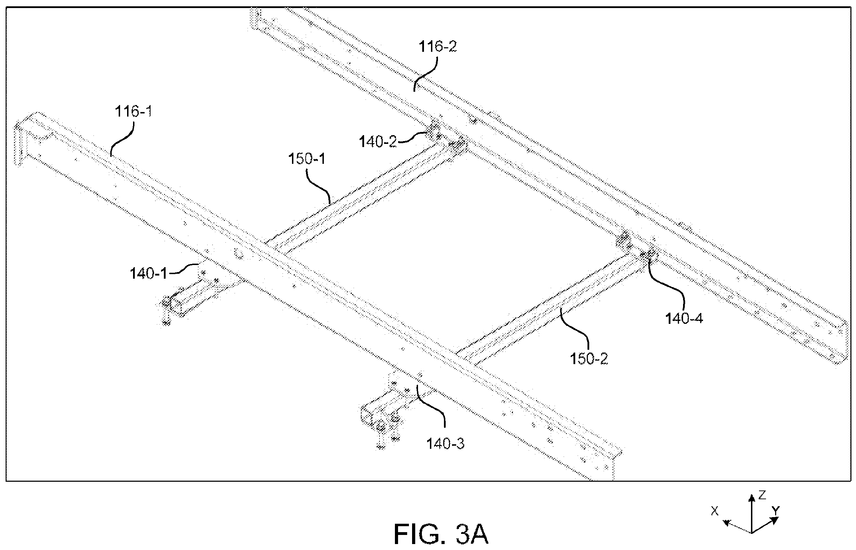

In one or more embodiments, the storage compartment 130 may be coupled to the trailer beams 116 using one or more of the mounting devices (such as mounting devices 140-1 to 140-4 shown in FIGs. 2 and 3A, collectively referred to as mounting devices 140) that form the attachment assembly. In one or more embodiments, multiple mounting devices 140 may be used to couple the storage compartment 130 to the trailer beams 116. For example, at least one mounting device 140 may be coupled to each trailer beam 116 to securely fasten the storage compartment 130 to the trailer 112.

In one or more embodiments, the storage compartment 130 may include a frame or structural support. The mounting device(s) 140 may be configured to couple to the frame, or a portion thereof, thereby holding and supporting the storage compartment 130 relative to the trailer beams 116.

FIG. 2 provides an isolated perspective view of the coupling between the trailer beams 116-1 and 116-2 and the storage compartment 130 via the attachment assembly formed by mounting assemblies 140-1 to 140-4.

In one or more embodiments, the storage compartment 130 may be coupled to the trailer beams 116 via at least one girder beam, labeled as 150-1, 150-2 (collectively referred to as girder beams 150). In one or more embodiments, a frame of the storage compartment 130 may be coupled to at least a portion of the girder beams 150. The girder beams 150 may be further coupled to the trailer beams 116 via the attachment interfaces, labeled as 142-1 to 142-4 (collectively referred to as attachment interfaces 142).

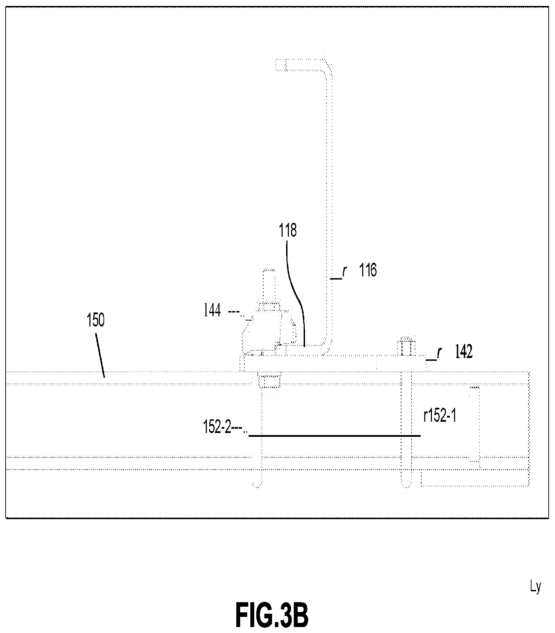

FIG. 3A shows an isolated view of the attachment assembly coupled to the trailer beams 116-1, 116-2, and FIG. 3B shows an orthogonal side view of the coupling between the girder beams 150 to the trailer beams 116 via the mounting devices 140 of the attachment assembly. In one or more embodiments, as shown, each of the mounting devices 140 may include a corresponding attachment interface 142. The attachment interface 142 may be configured to couple the girder beams 150 to the beams (e.g., 116).

In one or more embodiments, the girder beams 150 may be oriented substantially perpendicularly to the trailer beams 116. In such embodiments, the girder beams 150 may extend along the transverse direction (Y-axis). In other embodiments, the girder beams 150 may be oriented at an incline or angle relative to the trailer beams 116.

In one or more embodiments, the girder beams 150 may be configured to extend between the trailer beams 116-1 and 116-2. For instance, as depicted in FIG. 3A, each of the girder beams 150-1, 150-2 may be coupled to both trailer beams 116-1 and 116-2 via respective mounting devices (such as mounting devices 140-1, 140-2 for girder beam 150-1, and mounting devices 140-3, 140-4 for girder beam 150-2). The positions where the girder beams 150 are coupled to the different trailer beams 116-1, 116-2 may be substantially aligned with each other with respect to the longitudinal direction (X-axis).

In one or more embodiments, the girder beams 150 may be tubular structures. In such embodiments, the cross-sectional contour of the girder beams 150 may be substantially cylindrical or polygonal, such as square or rectangular as shown in FIGs. 2 to 7. In other embodiments, the girder beams 150 may include other structural shapes, such as C-beams, L-beams, or I-beams.

In one or more embodiments, the girder beams 150 may be fabricated from materials possessing sufficient strength and rigidity to support the weight and operational loads associated with the storage compartment 130.

FIG. 3B shows a close-up, partial schematic view of the coupling of at least one mounting device 140 (represented by attachment interface 142 and associated components) to the trailer beam 116 and the girder beam 150. In one or more embodiments, the mounting device 140, via the attachment interface 142, may be slidably coupled to the girder beam 150.

In one or more embodiments, as shown in FIG. 3B, a set of brackets (such as brackets 152-1 and 152-2, collectively referred to as brackets 152) may be physically coupled to the attachment interface 142. In one or more embodiments, the brackets 152-1, 152-2 may define a passage or channel through which the girder beam 150 may be passed. The passage, and the coupling of the attachment interface 142 to the bracket 152, may allow the position of the attachment interface 142 assembly relative to the girder beam 150 to be adjusted by sliding the attachment interface 142 along at least one dimension of the girder beam 150, such as along the transverse direction (Y-axis in this view relative to the trailer beam 116). After the attachment interface 142 is slid to the desired location along the girder beam 150, such as to align with the trailer beam 116 or a suitable attachment point thereon, the attachment interface 142 may be fixedly coupled to the girder beam 150 at that selected position. Such fixed coupling may be achieved by tightening another fastening means adapted to couple the girder beam 150 to the attachment interface 142 (such as nuts and bolts extending from the bracket 152 through the attachment interface 142, as shown in FIGs. 3B to 5).

In one or more embodiments, slide-ability along the transverse axis (Y-axis) enables the mounting device 140 of the attachment assembly to accommodate variations in the spacing between the trailer beams 116-1 and 116-2. The attachment interfaces 142 may be positioned along the girder beams 150 to align correctly with the respective trailer beams 116, regardless of the specific distance separating said trailer beams 116 (within the adjustment range), thereby enhancing the modularity and adaptability of the attachment assembly.

In one or more embodiments, the attachment assembly may include at least one fastener, such as fastener 144. The fasteners 144 may be configured to securely couple the attachment interface 142 to the corresponding trailer beam 116.

In one or more embodiments, the fasteners 144 may be configured to reversibly couple the attachment interfaces 142 to the trailer beams 116 by a flange 118. The flange 118 may extend from a web portion of the trailer beam 116. In embodiments where the trailer beam 116 includes an I-beam, the flange 118 may extend from both sides of the web. In embodiments where the trailer beam 116 includes a C-beam (as shown in FIG. 3B), the flange 118 may extend substantially perpendicularly from one edge of the web of the trailer beam 116.

In one or more embodiments, the fastener 144 may include any suitable fastening means that allows the attachment interface 142 to be reversibly or permanently coupled to the trailer beam 116. In one or more embodiments, the fastener 144 may include a clamp, as shown in FIG. 3B. In other embodiments, the fastener 144 may include, but are not limited to, screws, nails, adhesives, rivets, nuts and bolts, interlocking mechanisms, or combinations thereof.

In one or more embodiments where the fastener 144 includes a clamp, the clamp may be configured to physically couple the attachment interface 142 (such as by the planar structure thereof, for example) and the trailer beam 116 (such as at the flange 118) through a friction hold generated by compressive force of the clamp. Such a friction-based clamps may eliminate the need to drill holes into the trailer beam 116, thereby allowing the attachment assembly to be retrofitted to existing trailers 112. Additionally, clamps may be positioned and secured at any position along the longitudinal length (X-axis) of the trailer beam 116, offering flexibility in locating the storage compartment 130 longitudinally.

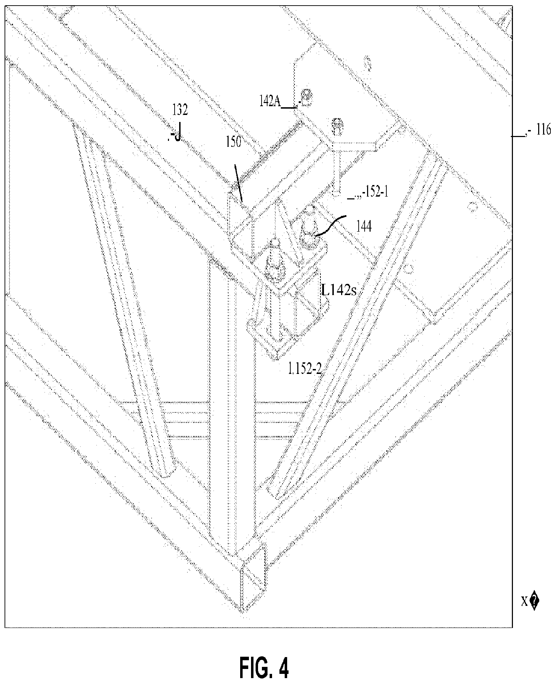

Referring now to FIG. 4, a perspective view of the coupling between the girder beams 150 and a frame 132 of the storage compartment 130 is shown.

In one or more embodiments, the girder beams 150 and the frame 132 may be fixedly attached to each other. In such embodiments, the girder beams 150 may be welded, bolted, or otherwise permanently fastened to at least one elongated member or portion of the frame 132. In other embodiments, the frame 132 may be reversibly attached to the girder beams 150.

In one or more embodiments, the coupling between the girder beam 150 and the frame 132 may allow for relative movement or adjustment therebetween. For instance, the frame 132 may be slidably coupled to the girder beam 150, allowing the attachment assembly to adapt to storage compartments 130 of different sizes or geometries.

In one or more embodiments, the frame 132 may be attached to the girder beam 150 at a location defined by a protruding portion extending from the at least one attachment interface (e.g., such as from the attachment interface 142-1 as shown in FIG. 4). The protruding portion of the girder beam 150 may be configured to engage with and support the frame 132 (or at least one elongated portion thereof).

In one or more embodiments, as illustrated in the example of FIG. 4, the girder beams 150 may be coupled to the frame 132 using another attachment interface. For instance, the mounting device 140 may include one attachment interface (e.g., 142A) configured to couple with the trailer beam 116, and another attachment interface (e.g., 142B) configured to couple with the frame 132, with both the attachment interfaces 142A, 142B being configured to support the girder beam 150. As shown, the another attachment interface 142B may be configured to couple at least a portion of the frame 132 to the girder beam 150 via bracket 152-2. The bracket 152-2 may include a corresponding passage, configured to support the portion of the frame 132. In one or more embodiments, another fastener (such as the fastener labelled as 144 in FIG. 4) may be configured to couple the bracket 152-2 to the another attachment interface 142-2, thereby securing the frame 132 to the girder beam 150.

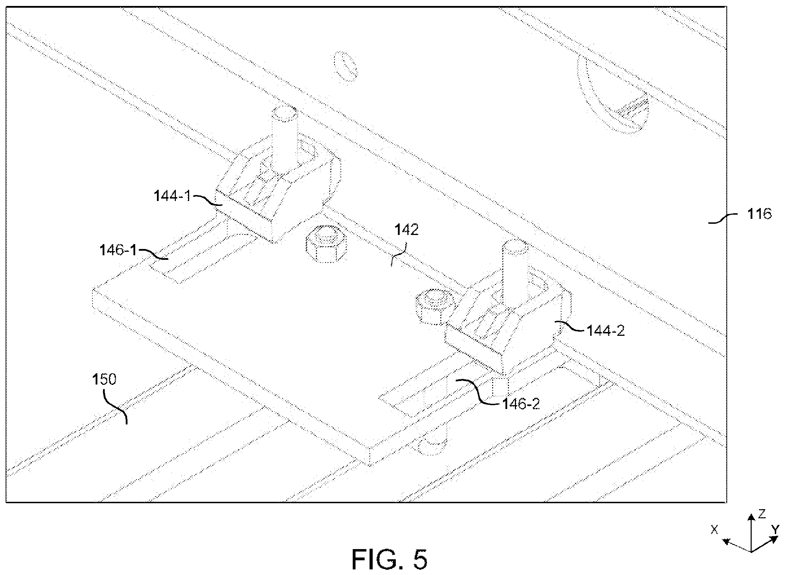

Referring now to FIG. 5, a perspective view of another embodiment of the attachment interface 142 is illustrated. In one or more embodiments, the attachment interface 142 may include one or more slots, such as slots 146-1 and 146-2 (collectively referred to as slots 146), defined therein. The slots 146 may be configured to accommodate the fasteners 144-1, 144-2. In such embodiments, the fasteners 144-1, 144-2 may be slidable along the length of the corresponding slots 146-1, 146-2.

In one or more embodiments, the slots 146 may be defined along at least one dimension of the attachment interface 142. For example, as depicted in FIG. 5, the slots 146-1, 146-2 may be elongated along the transverse direction (Y-axis, relative to the trailer beam 116). Such configuration allows the position of the fasteners 144-1, 144-2 to be adjusted along the transverse direction relative to the attachment interface 142. Such sliding of the fasteners 144 within the slots 146 allows the attachment assembly to adapt to variations in the geometry and/or width of the trailer beams 116 or the flange 118 thereof.

In one or more embodiments, the fasteners 144-1, 144-2 may be securely attached at any desired position along the respective slots 146-1, 146-2 (collectively referred to as slots 146). For example, when the fasteners 144 include clamps, the clamps may incorporate a nut and bolt mechanism that allows the clamp to be fixed on a desired position on the slots 146.

In one or more embodiments, the attachment assembly may be configured such that, for a given girder beam 150 extending between two trailer beams (e.g., trailer beams 116-1 and 116-2), a first attachment interface is fixedly coupled proximate to one end of the girder beam 150, while a second attachment interface is coupled proximate to the other end of the same girder beam 150.

In one or more embodiments, the second attachment interface may be fixedly coupled to the girder beam 150. In such embodiments, the first and the second attachment interfaces may be fixedly coupled to the girder beam 150, such as via any one or a combination of the fastener 144, the bracket 152, and/or another coupling means/faster adapted to fixedly couple the attachment interfaces 142 and the girder beams 150. The attachment interfaces 142 may be fixedly coupled when the attachment interfaces 142 have been coupled to the beams 116. The second attachment interface may include slots (such as slots 146 shown in FIG. 5) for the fasteners 144. In such embodiments, the adjustability relative to the trailer beam 116 may be achieved by sliding the fasteners 144 within the slots 146 on the attachment interface 142. Fixedly attaching at least one of the attachment interfaces 142 to the girder beam 150 may improve the structural rigidity of the attachment assembly.

In other embodiments, the second attachment interface may be slidably coupled to the girder beam 150, for example, using brackets 152 defining a passage for the girder beam 150, similar to that described in FIG. 3B. In such embodiments, the adaptability may be achieved by sliding the attachment interface 142 along the girder beam 150.

In one or more embodiments, the attachment interface 142 may include a planar structure or a plate-like structure configured to interface between the trailer beam 116 and the girder beam 150.

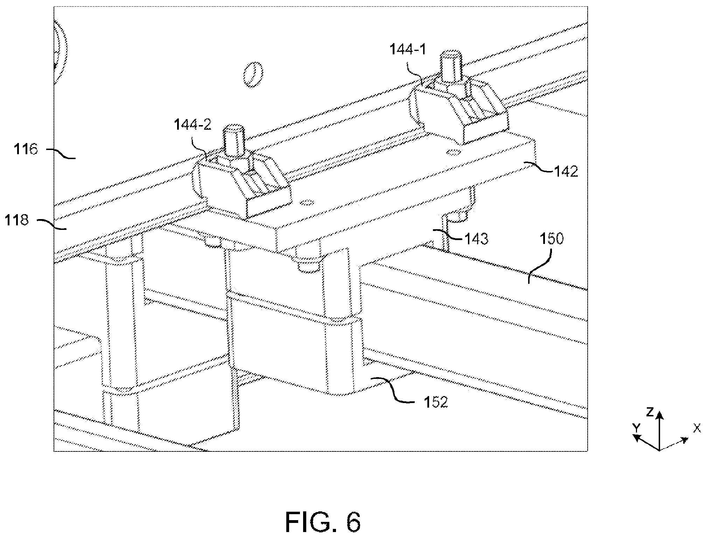

Referring now to FIG. 6, a perspective view illustrates another embodiment of the attachment interface 142. In one or more embodiments, where the attachment interface 142 may include a substantially planar profile, the attachment interface 142/planar structure may include one or more arms, such as arm 143, extending therefrom.

In one or more embodiments, the arms 143 may extend at least partially around the girder beam 150. In such embodiments, the arms 143 may be configured to support the girder beam 150, thereby allowing the attachment interface 142 to be slidably coupled to the girder beam 150.

Further, as shown in the embodiment of FIG. 6, the arms 143 may extend downwards towards the bracket 152. In such embodiments, the arms 143 may be coupled to the bracket 152. In one or more embodiments, the arms 143 may be coupled to the bracket 152 by another fastening means/another fastener, such as fasteners, welds, and the like. In one or more embodiments, the another fastening means may be tightened or loosened to either fixedly hold, and/or slidably couple the attachment interface 142 to the girder beams 150. In one or more embodiments, the fastening means may be tightened when the attachment interface 142 has been coupled to the beams 116 by the fastener 144.

In such embodiments, the arms 143 and the bracket 152 may form a box-like structure having the passage through which the girder beam 150 may be supported. The geometry of the box-like structure formed by the arm 143 and the bracket 152 may be selected/adapted to optimize for slide-ability and/or rigidity to support the girder beams 150, which in turn support the storage compartment 130.

In one or more embodiments, the arms 143 extending from the attachment interface 142 and coupled to the bracket 152, may define a passage configured to receive the girder beam 150. The girder beams 150 may be supported within the passage. Furthermore, the dimensions and configuration of the passage relative to the girder beam 150 may be such that the attachment interface 142 (along with the arms 143 and bracket 152) may be slidably coupled to the girder beam 150, allowing for adjustment along at least one dimension of the girder beam 150 (e.g., along the transverse direction of Y-axis).

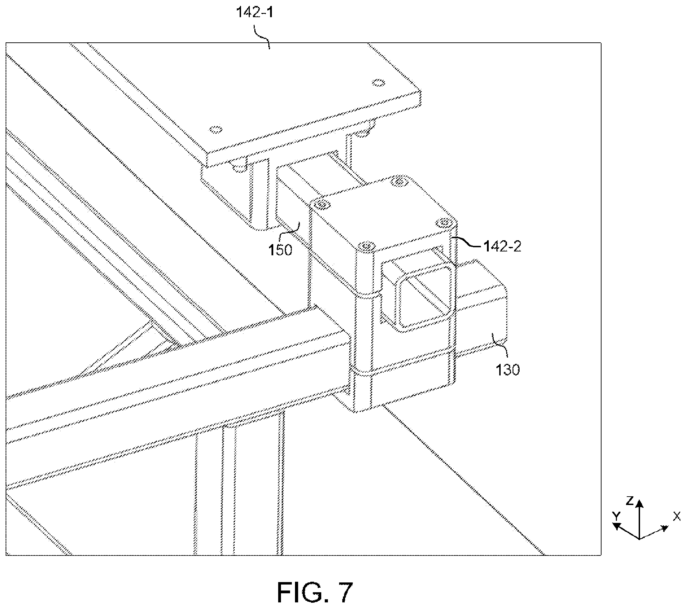

FIG. 7 illustrates another embodiment of the other attachment interface that couples the girder beam 150 to the frame 132 of the storage compartment 130. In one or more embodiments, similar to the attachment interface 142 coupling the trailer beam 116 to the girder beam 150, the other attachment interface may also include arms and/or brackets configured to form another passage. The other passage may be sized and shaped to receive and support at least one elongated element of the frame 132. In one or more embodiments, the other passage may also be configured to slidably couple the frame 132 to the girder beam 150, providing an additional degree of adjustability between the storage compartment 130 and the trailer beams 116.

Hence, the invention addresses the technical challenge of coupling storage compartments to transport vehicles having different configurations, and/or geometries, by employing attachment interfaces that are slidable on a girder beam. The ability for the attachment interface to slide along the girder beam, and/or for fasteners to slide within slots on the attachment interface (e.g., in the transverse direction), enables the attachment assembly to accommodate different widths between beams (and/or other geometries) of the transport vehicles (such as trailers) without requiring additional holes to be drilled or otherwise adapting the storage compartment and/or the beams. Thus, the invention enhances the modularity and versatility of the attachment assemblies of the storage compartments for use across diverse transport vehicle designs, geometries, and configurations.

While the invention has been described with reference to exemplary embodiments, it will be understood by those skilled in the art that various changes may be made and equivalents may be substituted for elements thereof without departing from the scope of the invention as defined by the appended claims. Modifications may be made to adapt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C .... and N, the text should be interpreted as requiring only one element from the group, not A plus N, or B plus N, etc.

## Claims

1. An attachment assembly for attaching a storage compartment (130) to a transport vehicle, the attachment assembly comprising:
one or more girder beams (150) configured to couple to a frame (132) of the storage compartment;
one or more attachment interfaces (142) slidably coupled to the one or more girder beams; and
at least one fastener (144) configured to reversibly fasten the one or more attachment interfaces to at least one beam (116) of the transport vehicle.

2. The attachment assembly of claim 1, wherein the at least one fastener (144) is further configured to friction hold the one or more attachment interfaces (142) and the at least one beam together (116).

3. The attachment assembly of any of claims 1 or 2, wherein the one or more attachment interfaces (142) comprise a planar structure.

4. The attachment assembly of claim 3, wherein the at least one fastener (144) is further configured to couple the planar structure to a flange (118) of the at least one beam (116), and/or, wherein the planar structure comprises at least one arm (143) configured to slidably support the one or more girder beams (150).

5. The attachment assembly of any of claims 1 to 4, further comprising a bracket (152) having a passage for the one or more girder beams (150).

6. The attachment assembly of claim 5, wherein the one or more attachment interfaces (142) are slidably coupled to the one or more girder beams (150) via the bracket (152), optionally, wherein the passage is formed by physical coupling of the bracket with an arm (143) of the one or more attachment interfaces.

7. The attachment assembly of any of claims 1 to 6, wherein the one or more girder beams (150) comprise a protruding portion extending from the one or more attachment interfaces (142), the protruding portion being configured to couple to the frame (132).

8. The attachment assembly of any of claims 1 to 7, further comprising another attachment interface (142) configured to slidably couple the one or more girder beams (150) to the frame (132).

9. The attachment assembly of any of claims 1 to 8, wherein the one or more girder beams (150) are perpendicular to the at least one beam (116).

10. The attachment assembly of any of claims 1 to 9, wherein the one or more attachment interfaces (142) comprise at least one slot (146) extending along at least one dimension of the one or more attachment interfaces,
optionally, wherein the at least one fastener (144) is slidably coupled to the one or more attachment interfaces at any position along the at least one slot.

11. The attachment assembly of any of claims 1 to 10, wherein the one or more attachment interfaces (142) are configured to couple to at least one position on the one or more girder beams (150) and/or the at least one beam (116).

12. The attachment assembly of any of claims 1 to 11, wherein the one or more girder beams (150) are fixedly coupled to the frame (132),
and/or, wherein the at least one fastener (144) comprises a clamp.

13. The attachment assembly of any of claims 1 to 12, wherein the one or more attachment interfaces (142) comprise a first attachment interface fixedly attached to the one or more girder beams (150), and a second attachment interface slidably coupled to the one or more girder beams (150),
and/or, further comprising another fastener (144) configured to fixedly couple the one or more girder beams (116) to the one or more attachment interfaces.

14. A mounting device (140) comprising:
at least one attachment interface (142) configured to reversibly couple to at least one beam (116), and configured to slidably couple to a girder beam (150), the girder beam being configured to support a storage compartment (130).

15. An attachment assembly for attaching a storage compartment (130) to a transport vehicle, the attachment assembly comprising:
one or more girder beams (150) configured to couple to a frame (132) of the storage compartment;
one or more attachment interfaces (142) fixedly coupled to the one or more girder beams, wherein the one or more attachment interfaces comprise at least one attachment interface having a slot (146); and
at least one fastener (144) configured to reversibly fasten the one or more attachment interfaces to at least one beam (116) of the transport vehicle at any position along the slot.
